Europäisches Patentamt

European Patent Office

Office européen des brevets

(19)

(11) Numéro de publication: **0 053 972**

**A1**

# DEMANDE DE BREVET EUROPEEN

(21) Numéro de dépôt: **81401898.2**

(22) Date de dépôt: **01.12.81**

(51) Int. Cl.³: **F 03 B 3/00**
**F 03 B 17/06**

(30) Priorité: **01.12.80 US 211838**

(43) Date de publication de la demande:
**16.06.82 Bulletin 82/24**

(84) Etats contractants désignés:
**AT BE CH DE FR GB IT LI LU NL SE**

(71) Demandeur: **Charpentier, Jean Frédéric Georges**
**3 rue du Pont de Madame Mille**
**F-18190 Chateauneuf sur Cher(FR)**

(72) Inventeur: **Charpentier, Jean Frédéric Georges**
**3 rue du Pont de Madame Mille**
**F-18190 Chateauneuf sur Cher(FR)**

(54) **Turbo machine convertissant sous très haut rendement l'énergie dynamique des fluides en énergie mécanique.**

(57) Turbo Machine pour convertir en énergie mécanique l'énergie dynamique des fluides, en utilisant la propriété spécifique de cette énergie qui est "sa proportionalité à la puissance cubique de la vitesse du courant", que ce convertisseur d'énergie utilise en divisant en deux parts la masse active cylindrique totale du fluide qu'il intercepte, dont: une masse active cylindrique centrale, et la masse active annulaire qui entoure la première et dont il utilise l'énergie pour accélérer cette masse active centrale;

Le convertisseur d'énergie est composé: d'un support central cylindrique fixe 10, dont l'ouverture frontale constitue l'orifice d'admission 11 d'un guide longitudinal convergent 12 qui dirige la masse active centrale de courant, entrée par l'orifice 11, dans un accélérateur composé à triple action 30, dont les éléments actifs sont insérés entre deux guides de profiles incurvés, qui changent la direction axiale initiale du courant, en direction radiale;

Co-axiallement montée sur l'accélérateur 30, et connectée avec lui par train d'engrenage epicycloidal, la turbine axiale composée dont les aubes 40 tournent autour du support central fixe 10, entraine en mouvement de rotation rapide l'accélérateur 30; cette combinaison permet de transférer à la masse active centrale, l'énergie interceptée par les aubes de la turbine axiale, à la masse active annulaire;

Ainsi en fin de course la masse active centrale, accélérée par l'énergie totale interceptée (au rendement prés des composantes) est injectée dans la Turbine Radiale Composée 50, avec une énergie fonction cubique de sa vitesse considérablement accrue par rapport à sa grandeur initiale, qui la restitue par son moyeu 59 sous forme mécanique, dans la chambre des machines 60 située à l'arrière du support central fixe 10.

EP 0 053 972 A1

*Fig. 3*

- 1 -

Turbo-Machine convertissant sous très haut rendement
l'énergie dynamique des fluides en énergie mécanique

L'invention consiste en une turbo-machine conçue pour utiliser
la propriété spécifique des fluides résidant en le fait que
leur énergie cinétique est une fonction cubique de leur vitesse, comme établi en remplaçant dans l'équation classique de l'
énergie cinétique: $E = (1/2) M V^2$, la masse M par la "Masse
Active" du courant fluide d'expression: $M_A = \rho S V_o$ , produit
de sa densité $\rho$, par son volume $\mathcal{V} = S V_o$ , de section S et de
longueur égale à sa vitesse initiale $V_o$ ; l'énergie prend
alors la forme: $E = (1/2)(\rho S V_o) V_o^2 = (1/2)(\rho S V_o^3) \ldots (1)$

L'accroissement considérable d'énergie obtenue par cette puissance cubique de la variable active: Vitesse, permet d'engendrer la conversion d'une quantité d'énergie déterminée au moyen de machines dont la surface d'interception de la masse active fluide est inversement proportionnelle à celle correspondante des machines conventionnelles; il en résulte des convertisseurs d'énergie compacts et très solides, éliminant toute
fragilité donc tous risques d'accidents, et permettant d'envisager la récupération de l'énergie des courants sous-marins
distribués presque partout sous cette surface des mers qui qui recouvre 73.5 % de celle de la terre.

Pour évaluer le principe opérational théorique du convertisseur, à ce point une première considération partielle des dessins est requise:

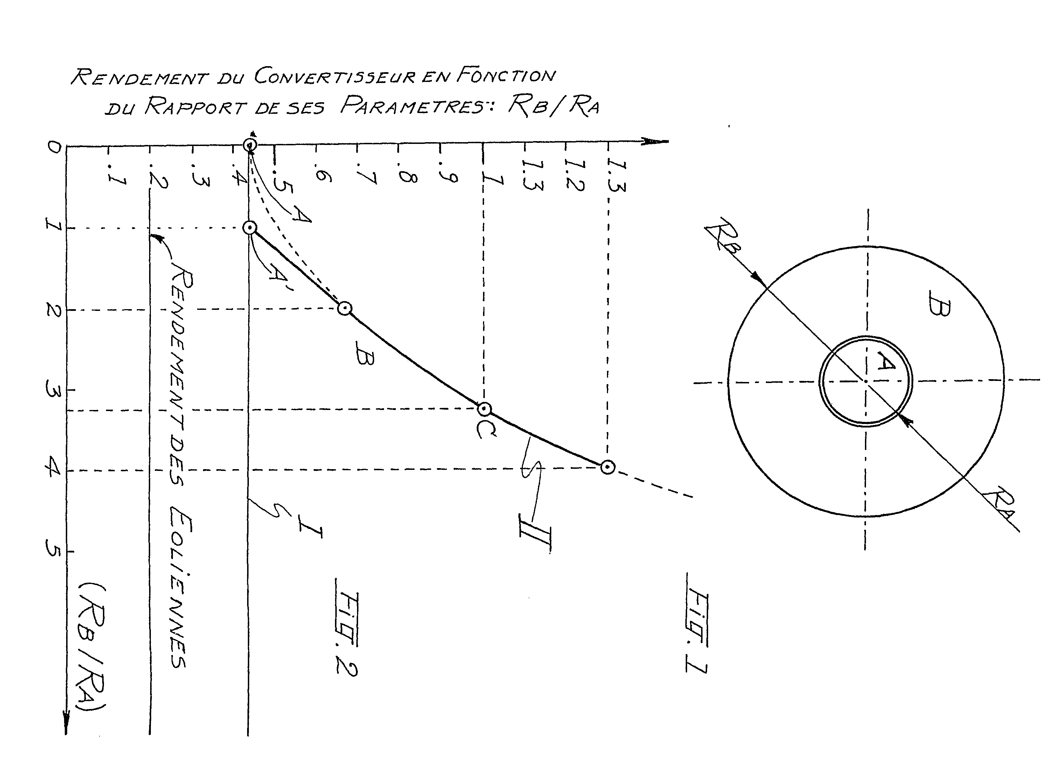

La figure 1 représente schématiquement les deux surfaces co-axialles d'interception: A et B, du convertisseur:

Une surface centrale circulaire A, de rayon $R_A$, de grandeur $S_A = \pi R_A^2$, qui intercepte l'énergie: $E_A = (.5) \rho S_A V_o^3 \ldots$ (2)

Une surface annulaire B, de rayon intérieur $R_A$ et extérieur $R_B$, de grandeur $S_B = \pi (R_B^2 - R_A^2)$, qui intercepte l'énergie: $E_B = (.5) \rho S_B V_o^3 \ldots$ (3)

La figure 2 illustre les fonctions de rendement du convertisseur;

La figure 3 est une coupe longitudinale dans le plan de symétrie du convertisseur, qui est composé comme suit:

Une structure fixe 10, comportant un orifice frontal d'admission 11, correspondant à la surface centrale A de la figure 1;

Montée co-axialement, libre de touner autour de la structure fixe 10 sur laquelle elle prend appui, une turbine axiale dont les aubages 40 engendrent en tournant un disque annulaire activé, correspondant à la surface annulaire B de la figure 1;

Cette turbine est intérieurement connectée par le train d'engrenage épicycloidal d'éléments: 70, 71 et 73, a un accélérateur 30, auquel elle restitue, à son rendement près: $\mu_{TA}$, la part effective ou absolue $|E_B|$ de l'energie interceptée, telle que: $|E_B| = \mu E_B = \mu (.5) \rho S_B V_o^3 \ldots$ (4)

Ainsi l'énergie absolue $|E_B|$, est transférrée sous forme d'accélération $\gamma$, à la masse active centrale $M_A$ dont la grandeur est maintenue constante, pour que cette apport d'énergie soit exclusivement utilisée à lui transmettre un accroissement de vitesse: $\Delta V$ Maximum Maximorum, et en fin d'accélération une vitesse: $V_A = V_o + \Delta V$ ... (5), à laquelle correspond une énergie aussi proche que possible de celle de la masse active totale interceptée: $E_T = \rho (S_A + S_B) V_o^3$ ... (6)

Ainsi concentrée dans la masse active centrale accélérée $M_{AA}$, et exprimée par l'équation (1), cette énergie $E_{AA}$ se présente sous la forme: $\quad E_{AA} = (\mu)(.5)(\rho S_A V_o)(V_o + \Delta V)^2 =$

$$(.5)(\rho S_A)(V_o^3 + 2 V_o^2 \Delta V + V_o \Delta V^2) \ldots (7)$$

Energie qui est finalement transmise à une "Turbine Réceptrice Radiale Composée", qui la restitue sous haut rendement en forme mécanique;

Mais l'évaluation de l'accélération $\gamma$ transmise à la masse active centrale $M_A$ par l'énergie absolue $|E_B|$ de la masse active annulaire $M_B$, exige en premier la détermination de la "Force Transmissible par l'Energie d'une Masse en Mouvement à une Autre Masse", détermination qui, à ce jour, n'existe pas et constitue donc le premier problème à résoudre;

La solution est la suivante: Dans l'équation de la force recherchée: $F_B = M_A \gamma_A$ ... (8), substituons à l'accélération: $\gamma_A$ sa forme équivalente de dérivée $dV/dt$, de la vitesse $V$, il vient $F = M (dV/dt)$ ... (9); équivalent à: $F \, dt = M \, dV$ ... (10) Multiplions les deux membres par la Vitesse $V$; l'équation (10) prend la forme: $F \, V \, dt = M \, V \, dV$ ... (11) ;et en intégrant du temps 0 au temps $t$, on obtient:

$$\int_o^t F \, V \, dt = \int_o^V M \, V \, dV \longrightarrow F \, V \, t = M \, V^2 / 2 \ldots (12)$$

Expression en parfait agréement avec l'énoncé de définition de l'Energie Cinétique, dans laquelle le parcours de travail: $L$ de la force $F$, est egal a: $L = Vt$ ;et l'équation est homogène car les deux membres satisfont bien à la même équation aux

dimensions: $F V t = (L M T^{-2})(L T^{-1})(T) = M L^2 T^{-2} = MV^2/2$

En sélectionnant pour l'équation $(10_B)$ un temps d'action "t" égal à une seconde,le parcours d'action: L est alors égal à la vitesse V ,et il vient: $L = V t = V (1s) = V$ ;cas particulier;

et l'équation $(10_B)$ prend la forme toujours homogène:

$F V = M V^2/ 2 ... (13)$ ; et en divisant les deux membres de cette équation par la vitesse V il vient: $F = M V/ 2 ... (14)$

Ces expressions nouvelles des équations (13) et (14) sont denotées respectivement:

F V : Puissance Dynamique,qui est égale à l'Energie Cinétique

$F_D = MV/2$ : Force Dynamique Transmissible par l'Energie Cinétique d'un corp à un autre corps;

Il doit être mentionné ici que l'intégration de l'équation (10) $\int_o^t F\, dt = \int_o^V M\, dV \rightarrow F t = M V ... (15)$ qui exprime la relation dénotée "Quantité de Mouvement" n'a jamais été justifiée au cours des expériences correspondant au temps: $t = 1$ seconde; malheureusement d'ailleurs;

Avec l'équation (14) le dévelopement mathématique d'estimation du rendement du convertisseur est possible et se présente comme suit:

La masse active totale $M_T$ du courant intercepté par la surface complète: $S_T = S_A + S_B = \pi R_B^2$ du convertisseur est égale à: $M_T = \rho S_T V_o = \rho \pi R_B^2 V_o$ ; et contient l'énergie totale: $E_T = (.5) \rho S_T V_o^3 = (.5) \rho (S_A + S_B) V_o^3 = (.5) \rho \pi R_B^2 V_o^3 .. (16)$

La masse centrale active: $M_A = \rho S_A V_o$ ,interceptée par la surface: $S_A = \pi R_A^2$ ,contient l'énergie: $E_A = (.5) \rho (\pi R_A^2) V_o^3 ,.. (2)$ cette masse est maintenue constante tout au long de son parcours d'accélération au moyen d'une variation systématique de la section: $S_X$ de tous ses dispositifs de guidage qui,à toute distance: X de l'orifice d'admission,11 en figure 1, où sa

vitesse est égale à $V_x$ , satisfait la condition: $S_A V_o = S_x V_x$;

La masse active annulaire: $M_B = \rho S_B V_o$ , interceptée par la

surface correspondante: $S_B = \pi (R_B^2 - R_A^2)$, contenant l'énergie:

$E_B = (.5) \rho S_B V_o^3 = (.5) \rho \pi (R_B^2 - R_A^2) V_o^3$ , applique sur la masse active centrale $M_A$ , au travers de l'accélérateur 30, une force longitudinale, fonction de l'équation (16), égale à:

$$F_B = E_B / V_o = (.5) \rho \pi (R_B^2 - R_A^2) V_o^2 \quad \dots (16_A)$$

Cette Force $F_B$ transmet à la masse active centrale $M_A$ une accélération longitudinale $\gamma_x$ , égale à:

$$\gamma_x = (.5) \rho \pi (R_B^2 - R_A^2) V_o^2 / \rho \pi R_A^2 V_o = (.5) \left( \frac{R_B^2}{R_A^2} - 1 \right) V_o \dots (17)$$

Dans cette équation les "Rayons: $R_A$ et $R_B$" sont les "Paramètres de rendement du Convertisseur" ;

Pour les calculs déterminants qui suivent, il y a lieu de prendre le rayon $R_A$ pour unité de longueur, ainsi l'accélération $\gamma_x$

s'exprime sous la forme simple: $\gamma_x = (.5)(R_B^2 - 1) V_o \dots (18)$

ou $\gamma_x$ est fonction de $R_B^2$ et $V_o$ , et s'annulle pour: $R_B = R_A = 1$

en effet dans ce cas la masse active annulaire disparait, $\gamma_x = 0$

Accordant à $R_B$ la grandeur: 3.25, l'accélération correspondante

est égale à:

$$\gamma_x = (.5) \left[ (3.25)^2 - 1 \right] V_o = (.5)(10.56 - 1) V_o = (.5)(9.56) V_o =$$

$\gamma_x = (4.78) V_o$ , grandeur qui, corrigée pour le rendement de la turbine axiale annulaire 40, égal à: $\mu_{TA} = .55$, engendre une accélération effective égale à: $\gamma_{xe} = (.55)(4.78) V_o = (2.63) V_o$

à laquelle correspond en fin d'accélération la vitesse $V_{XA}$:

$V_{XA} = V_o + \gamma_{XE} = V_o + (2.63) V_o = (3.63) V_o$ , qui à la puissance 2 est égale à: $V_{XA}^2 = (13.1769) V_o^2$ ;

D'où la grandeur de l'énergie correspondante transférée à la

Masse Active Centrale Accélérée $M_{AA}$ : $\dots (19)$

$E_{AA} = (.5)(\rho \pi V_o) V_{AA}^2 = (.5)(\rho \pi V_o)(13.1769) V_o^2 = (6.588) \rho \pi V_o^3$

qui est convertie en énergie mécanique par la Turbine Radiale Composée Réceptrice Finale,dont le rendement est supérieur à 80 %, mais pris égal à cette valeur,ce qui assure une Energie Finale de grandeur effective; ou Absolue:

$$E = \mu_{RT} \; E_{AA} = (.80)(6.588) \varrho \pi V_o^3 = (5.27) \varrho \pi V_o^3$$

Tandisque l'Energie Correspondante Totale Interceptée est égale à: $E_T = (.5) \varrho \pi R_B^2 V_o^3 = (.5) \varrho \pi (10.56) V_o^3 = (5.28) \varrho \pi V_o^3$ , dont le rapport,représentant le rendement, est égal à l'Unité;pour un rapport compatible des paramétres;

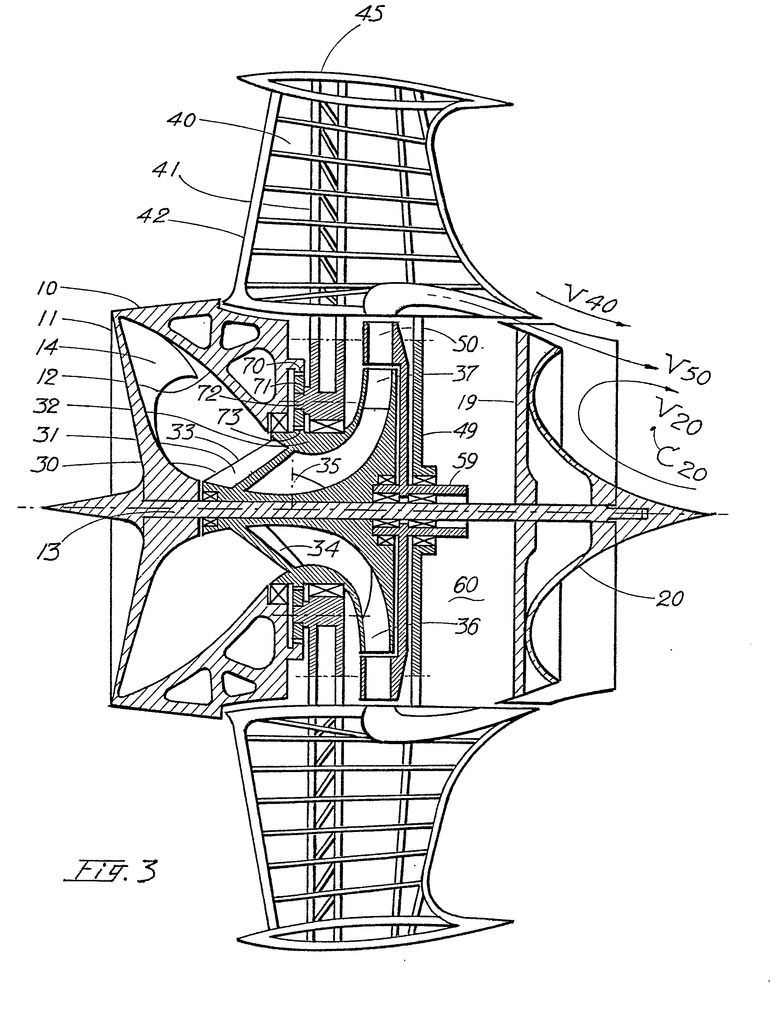

En figure 2 sont illustrées les deux fonctions de rendement du convertisseur:

La droite I parallèle à l'axe des abscisses,représente ce que serait la fonction du rendement absolu$|\mu|$en l'absence supposée de l'accélération $\gamma_x$;ce rendement serait égal au produit des rendements partiels $\mu_{TA}$ et $\mu_{TR}$ des deux turbines: axiale 40 et radiale 50,c'est à dire à la constante:$|\mu|=(.55)(.80) = .44$ ; comme c'est le cas pour toutes les turbines à vent en existence à ce jour,mais correspondant à des constantes moins élevées la meilleure actuelle étant égale à : $\mu = .334$ ,et pour les autres:$\mu = .20$ ;

Par la combinaison de ses composantes qui engendrent l'accélération $\gamma_x$,le rendement absolu du convertisseur est la fonction parabolique illustrée par la courbe II, dont la forme théorique est,à,l'origine imaginaire suivant la longueur AB, mais réelle suivant A'B puisque la surface annulaire $S_B$ génératrice de l'accélération a pour origine la grandeur: $R_B = R_A = 1$ ;

Le tracé des courbes fonctionnelles met en évidence l'intéret du rendement élevé des composantes du convertisseur déjà référé.es,et comprenant:

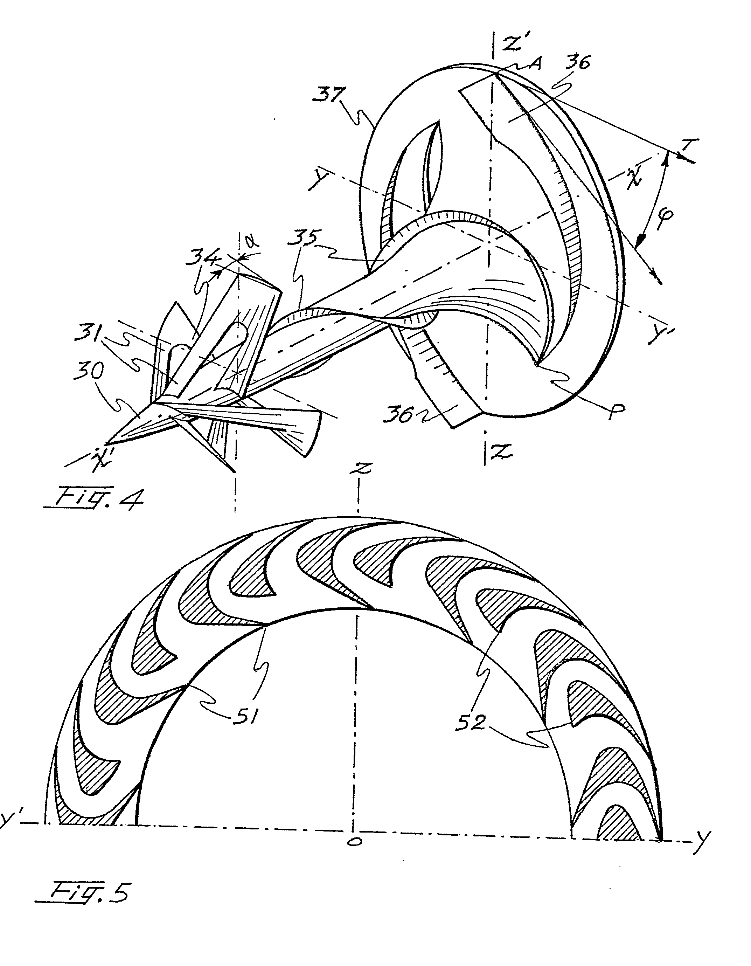

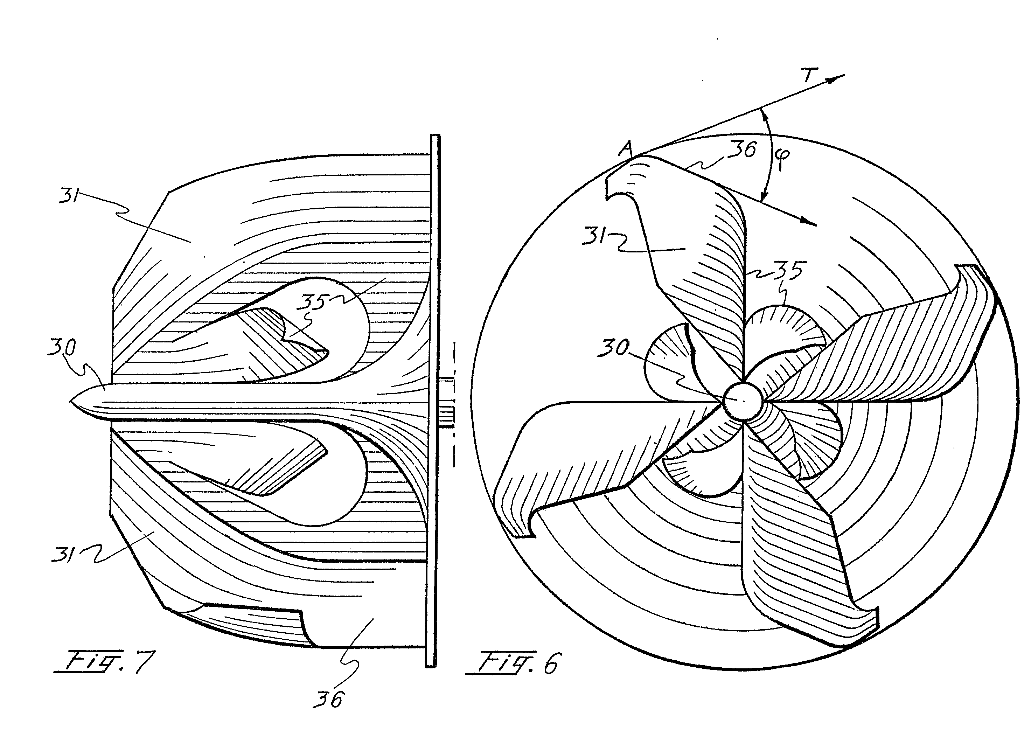

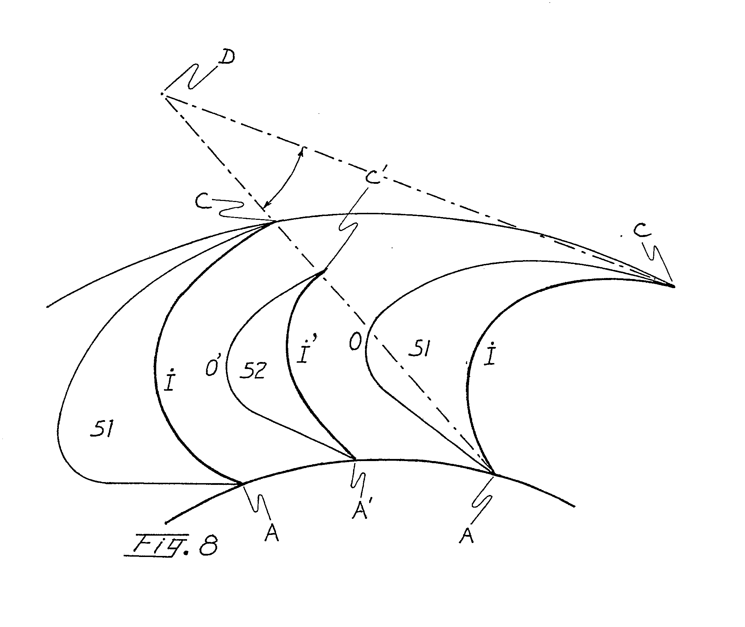

Les turbines: axiale 40,et radiale 50, dont les principes de structure composée sont illustrés en figures 5 et 8 ;et l'accélérateur 30,illustré dans sa forme théorique complète en figure 4;et sous sa forme expérimentale concentrée,en vue frontale,figure 6, et en vue de profile,figure 7,dans laquelle l' aubage horizontal sur bâbord est supposé démonté pour permettre de suivre aisément la forme des aubages verticaux;

L'invention est exposée maintenant dans le détail des conceptions de ses composantes,structurées pour satisfaire les principes opérationels énoncés,permettant d'obtenir les résultats établis mathématiquement ci-avant;

Le convertisseur d'énergie fluide illustré en figure 1 est valable pour tous les fluides,avec les moyens d'adaptation requis pour tous dispositifs permettant de prendre appui partout ou l'énergie des courants fluides est valable: depuis le fond des mers,jusque sur le haut des tours et les sommets des montagnes;

Ce Convertisseur est composé de quatre Unités Spécifiques:

1) Une Structure Centrale Fixe 10, capable de recevoir tous systèmes de fixation requis; de section générale circulaire constituant le Support de l'Ensemble Tournant ,et comprenant une ouverture frontale circulaire 11,de rayon: $R_A$ ,premier paramètre de rendement du convertisseur,et constituant l'orifice d'admission d'un guide axial 12,comportant des inducteurs de mouvement 14,capables d'Imposer sans chocs un changement de direction à la masse active $M_A$ interceptée par l'ouverture centrale 11,dont la section d'interception: $S_A = \pi R_A^2$ ,varie dégressivement en direction aval,suivant une fonction inverse de l'accélération $\Delta V$ transmise à la masse active centrale interceptée dont la forme initiale: $M_A = \rho\, S_A\, V_o$ ,contient les grandeurs à l'origine des variables: section S et vitesse V qui,à la distance X deviennent les grandeurs: $S_x$ et $V_x$ ,satisfaisant la condition: $M_A = \rho\, S_A\, V_o = \rho\, S_x\, V_x = $ Constante ...(20)

d'où: $S_x = S_A\, (V_o\, /(V_o + \Delta V))$ ,qui tend vers zéro quand $\Delta V$ tend vers l'infini;

Directement et indirectement supportés par l'arbre central 13 de la structure fixe 10,sont co-axiallement montés libres de tourner:

2) Une Turbine Axiale Extérieure Composée avec ses aubes 40 radialement étendues autour de la structure centrale fixe 10, qui engendrent en tournant la Surface Annulaire d'Interception $S_B$,représentée en figure 1, du courant fluide,de rayon intérieur de l'ordre de grandeur du rayon $R_A$ de l'orifice central d'admission 11,et de rayon exterieur $R_B$ ,second paramétre de rendement du convertisseur,dont la grandeur est determinée en fonction du rapport requis entre la grandeur de l'énergie de la masse active annulaire: $E_B = (.5)\rho\pi(R_B^2 - R_A^2)\, V_o^3$ ,et celle de la masse active centrale: $E_A = (.5)\rho\pi R_A^2\, V_o^3$ ,pour l'obtention de l'accélération désirée en fonction des rendements des composantes du circuit de conversion;

3) Un Accélérateur Central 30 directement monté libre de tourner sur l'arbre central fixe 13,et dans lequel s'engage la masse active centrale $M_A$ ,sortant du guide central fixe 12, et entraine en mouvement de rotation , par l'énergie $E_B$ restituée, au rendement prés,par la turbine axiale extérieure composée 40 sous forme mécanique transmise par les pignons satellites 71, portés par le longeron principal 41 de chacune des aubes 40,et qui prennent point d'appui extérieurement sur la couronne dentée 70 ,de grand diamétre et portée par la structure centrale

10,pour entrainer dans le sens positif et à grande vitesse,la petite couronne dentée extérieure 73 montée autour de l'accélérateur 30;

Cet accélérateur 30 est illustré partiellement en figure 4 où son guide extérieur,réferré 32 en figure 3,est retiré pour laisser voir sa structure composée qui accélère la masse centrale active $M_A$ en lui imposant une trajectoire évolutive á la fois en vitesse et en forme,mais en maintenant sa grandeur constante en vertu du principe explicité ci-avant et traduit par l'équation (20);

Simultanément cet Accélérateur Composé 30 a pour second principe d'Imposer à la masse qu'il Accélère la "Longueur de Parcours Correspondant au Temps Requis pour obtenir,par ses différentes Phases d'Accélération,la Vitesse Finale d'Ejection Désirée"(principe applicable à tous les types de Turbo-Machines) et correspondant à la grandeur d'énergie maximum restituée sous forme mécanique par la Turbine Radiale Composée 50;

Le profile du corps central 30 peut constituer,soit patiellement comme représenté en figure 3,soit totalement comme représenté en figure 4,le guide intérieur de la masse active centrale $M_A$ ;dans ce second cas le corps central comprend: une pénétration conique évoluant en forme cylindrique ou autre, mais de section toujours circulaire,avec une méridienne de profile terminal optimal,telle que par exemple: une demie-ellipse ou parabole,ou spirale logarithmique,dont la tangente au point final est toujours dirigée radialement et contenue dans le plan du plateau 37, d'axes: ZZ et YY';

Entre ses guides intérieur 30 et extérieur 32,l'accélérateur comprend tout ou partie des éléments actifs suivants:

A son entrée des éléments hélicoïdaux: 31 et 34,en figures 3 et 4,et 31 en figure 6 et 7,qui entretoisent les deux guides 30 et 32,en figure 3 et 4,et transmettent une accéleration a- xiale à la masse active centrale $M_A$;

ces éléments sont constitués d'aubages représentés sous forme spécifique détaillé en figure 4,forme qui a pour but d'éliminer l'inversion du sens opératoire des profiles hélicoïdaux au voisinage de leur moyeu où leurs formes évolutives défavorables substituent à leur action d'accélération longitudinale un entrainement tangentiel de la masse active au point que le tiers médian d'une hélice est caréné parce que plus néfaste qu'utile;ce désavantage est éliminé de la manière représetée en figure 4,montrant que,à une distance déterminée du profile périphérique matérialisé sur le guide extérieur 32,ces aubages s'ouvrent progressivement en direction de l'axe central XX,en constituant deux jambes,dont une droite 31 lancée trés en avant,et une gauche 34 lancée moins en avant et dont les longueurs additionnées des cordes de leur deux profiles correspondants,c'est à dire également distants de l'axe central XX, peut être,soit constante,soit inférieure et dégressive re lativement à la longueur de la corde du profile périphérique; cette forme assure aux profiles centraux par leur minceur et leur angle d'attaque compatible une évolution variable mais continue de leur action accélératrice sur toute l'étendue ra- diale de l'hélicoïde et transférent à la masse active centrale $M_A$ une accélération longitudinale: $\gamma_x = (dV_x/dt)$,dont la vitesse correspondante a la forme: $dV_x = \gamma_x\, dt$,qui intégrée dans le temps: $t_1$ requis par la fraction correspondante: $dM_A$

de la masse active $M_A$ pour restée soumise à l'action de l'

hélicoïde,prend la forme définitive:

$$V_x = \gamma_x t_1 + \text{Constante} = \gamma_x t_1 + V_o$$

Adjacents aux éléments actifs arrière 34 de l'hélicoïde,

prennent origine:des spirales 35 inductrices de mouvement tangentiel,enroulées positivement,ou négativement comme en figure 4;spirales qui transmettent à la masse active centrale $M_A$ une accélération tangentielle de forme:

$$\gamma_t = \frac{d(R\omega)}{dt} = \frac{R\,d\omega + \omega\,dR}{dt} \quad \text{qui, avec: } \omega = \text{Constant}$$

se réduit à: $\gamma_t = \omega \dfrac{dR}{dt}$ , de vitesse dérivée correspondante:

$dV_t = \gamma\,dt = \omega\,dR$ , à intégrer dans le temps $t_2$ :

$$\int_o^{t_2} dV_t = \int_o^{t_2} \gamma_t\,dt = \int_o^{\bar{R}} \omega\,dR \quad \text{,d'où la vitesse tangentielle finale:}$$

$V_{t_2} = \gamma_t t_2 = \omega\bar{R}$ , où $\bar{R}$ est le rayon correspondant du centre de gravité d'une fraction de section référentielle de la masse active centrale $M_A$ ; comme montré en figure 4 les extrémités de ces spirales viennent s'évanouir sur le plateau support 37 ou elle livrent la masse $M_A$ déjà deux fois accélérée, à l'action d'un accélérateur centrifuge 36;

L'Accélérateur Centrifuge 36 applique pendant le temps $t_3$

sur la masse: $dM_A = M_A t_3$ ,la force $F_c = dM_A \omega^2 \bar{R}$ et lui

transmet l'Accélération Radiale: $\gamma_{\bar{R}} = \omega^2 \bar{R}$ ;ou $\bar{R}$ est le rayon défini ci-dessus ligne 13;

Quand,enroulées négativement comme en figure 4,les spirales 35 ont leur extrémité évanouissante sur le plateau support 37,et livrent alors sans choc la masse active à l'accélérateur 36 dont les aubages,incurvés dans le sens positif, lui transmettent une accélération radiale supérieure à; mais admise égale a:

$\gamma_R = \frac{dV_R}{dt} = \omega^2 \bar{R}$ d'où:la vitesse correspondante en fin d'

accélération:  $dV_R^w = \omega^2 \bar{R}$ dt ,et en intégrant dans le temps

correspondant $t_3$ ,il vient:  $\int_o^{V_{t_3}} dV_R = \int_o^{t_3} \omega^2 \bar{R} dt =$

d'où:  $V_{R_{t_3}} = \omega^2 \bar{R} t_3$

Ainsi la vitesse finale d'éjection $V_E$ de la masse active accélérée est de forme: $V_E = V_0 + \gamma_x t_1 + \gamma_t t_2 + \gamma_R t_3$

Cet Hélico-Spiralo-Centrifuge Accélérateur,comme illustré en figure 4 est un exemple de configuration dévelopée sous forme théorique complète;parmi toutes les combinaisons possibles de formes et positions relatives des composantes basées sur le même principe opérationel,et qui peuvent être réalisées sous forme compacte et trés efficiente,comme illustré en figures 6 et 7;enfin chacune des composantes spécifique de cet accélérateur: Hélicoide,Spirale et Accélérateur centrifuge,

peuvent être également utilisées séparément;

4)    Ainsi l'Energie Finale Absolue $|E|$ entrant dans la Turbine Radiale Composée 50, de la masse active accélérée $M_A$ ,

est egále à: $|E| = (.5)(\rho S_A V_0)(V_E^2) =$

$(.5)(\rho S V_0)(V_0 + \gamma_x t_1 + \gamma_t t_2 + \gamma_R t_3)^2 ... (21)$

Cette Equation met en évidence l'importance considérable de la sous unité de temps, telles que: $t_1$ ,$t_2$ et $t_3$ ,dont l'absence usuelle de considération engendre des résultats faux;

La structure composée illustrée en figure 5 de la Turbine Radiale 50, comme celle illustrée en figure 8,de principe valable pour Turbines Radiales et Axiales,comme la Turbine 40,justifie leur dénomination de "Turbine Radiale Composée" et "Turbine Axiale Composée";cette structure leur confére des principes opérationels nouveaux leur permettant de convertir sous haut rendement l'énergie interceptée;

Ces structures comprennent Deux Séries d'Aubages Différents et Alternés:

A) Une première série d'aubes principales 51,figure 5,séparées par un espace optimum,avec une ligne médiane de profile aussi longue et incurvée que possible pour que les directions médianes: AD et CD, figure 8,de leur bord d'attaque A et de leur bord de fuite C,forment un angle extérieur : $\theta$ dont l'ordre de grandeur,et non limitatif,peut atteindre 322 degrés ;avec leur surface d'intrados au profile profondément concave,et celui de leur extrados aussi long que possible relativement au précédent;avec des bords d'attaque trés aigus et positionés pour recevoir la masse active accélérée fluide sous l'angle optimal,relatif à la circulation des vitesses

B) Une seconde série d'aubes complémentaires 52 ,figures 5 et 8,avec chacune de ces aubes insérée entre une paire d'aubes principale 51,avec leur forme de profile et leur position adaptée à celles des aubes principales dans le but de substituer,au canal de profile divergent constitué par les faces opposées de deux aubages consécutifs de profile identique , deux canaux : 53 et 54 ,dont les profiles différents entre eux,sont déterminés chacun pour satisfaire les fonctions suivantes:

1) Le profile du canal 53 est convergent pour accélérer la masse active qui s'y engage en contournant la surface convexe de profile AOC présentée à droite par l'extrados de l' aube principale 51,tandisque qu'appuyant sur la surface concave,de profile A'I'C',présentée à gauche par l'intrados de l'aube complémentaire 52;

Il doit être noté ici que le critére de rendement relatif aux turbines à impulsion statuant que:"Quand le fluide quitte la turbine à la vitesse zéro toute l'énergie cinétique de la masse active a été transférrée à la turbine", n'est pas valable pour les turbines de l'invention et dont le critére de rendement,fonction des formes de ses composantes et de leur mode opérationel,est défini comme suit:

"L'énergie transférrée par la masse active fluide défléchie tout au long des surfaces à profile concave de l'intrados des aubes des présentes Turbines,est le travail correspondant au déplacement tangentiel transmis à la turbine par:

a)    La réaction en Force Centrifuge engendrée par la courbure considérable imposée à la trajectoire de la masse active fluide accélérée: $F_C = MV^2/R$ ...(22)

b)    La Force Dynamique transmissible par l'énergie cinétique et définie par l'équation (14) page 4 ligne 7,de la présente théorie, de forme:  $F_D = MV/2$ ... (14)

A simple vue de ces deux équations est ressentie la prépondérance considérable de la Force Centrifuge (22) sur la Force Dynamique (14) d'autant que le rayon de courbure R, exprimé évidemment en métres,est trés petit;

2)    Le profile du canal 54 a une section constante pour maintenir à sa grandeur initiale la vitesse de la masse active qui s'y engage; il est constitué à droite par l'extrados de contour A'O'C' de la vane complémentaire 52,et à gauche par l'intrados de contour AIC de la vane principale 51;

Cette condition jointe á la différence maximum possible entre les longueurs des profiles d'extrados de contour AOC, et d'intrados de contour AIC des aubes principales, assure la grandeur maximum de la Circulation des Vitesses autour de ces aubes, circulation de forme:

$$\Gamma = \int_A^{OC} V_O \cos\theta \, dS_O - \int_A^{IC} V_I \cos\theta \, dS_I \;;$$

De plus la masse active accélérée dans le canal 53 engendre sur les aubes complémentaires 52, une réaction additionelle à composante tangentielle positive:

$$R = (-M\,\Delta V/2) = M\,\Delta V/2 = \rho S\left[(V_O + \Delta V)^2 - V_O^2\right] \;;$$

Ainsi la Force Résultante Tangentielle de toutes les actions positives appliquées sur les Turbines Composées de l'invention est de forme:

$$\Sigma F_{R_t} = F_C + F_D + R + \Gamma =$$

$$\rho \frac{SV_A^3}{R} + \rho \frac{SV_A^2}{2} + \rho S\left[(V_O + \Delta V)^2 - V_O^2\right] + \oint V \cos\theta \, dl \ldots (23)$$

En addition, dans le cas ou les vanes des Turbines Axiales et Radiales sont fixées par une seule extrémité à leur support, comme c'est le cas pour la Turbine Axiale 40, en figure 1, ces vanes peuvent bénéficier des Carénes Marginales 45, figure 1, décrites dans les brevets francais de l'auteur: No.:799.706 du 22 Mars 1935, et son Addition: No.: 47.125 du 2 Mars 1936; Carénes qui réduisent substantiellement la résistance de l'aile, ou de l'Aube qui en est pourvue, en engendrant autour d'elle un Tourbillon Potentiel qui, positioné en harmonie avec la forme marginale de l'aile, constitue un entonnoir dans lequel le vide intérieur aspire la couche limite d'une grande partie de l'aile pour la rejeter à trés grande vitesse suivant un filet tourbillonaire serré qui élimine la résistance imposée à l'aile par le remorquage de la masse d'air parasitaire retenue par la dépression intérieure du tourbillon marginal classique; et qui élimine également une partie de la résistance opposée par le remorquage de la couche limite qui, comme expliqué dans les brevets précités, s'évacue le long du bord de fuite des ailes suivant une nappe tourbillonaire qui, par induction de friction entraine des couches de masses d'air adjacentes; tout cet ensemble remorqué constituant le Sillage;

Ainsi c'est l'Energie correspondant à la Force Resultante Tan Tangentielle correspondant à l'équation (23), que reçoit la Turbine Radiale Composée 50, figure 3, pour la restituer sous forme d'Energie Mécanique dans la chambre des machines 60, comprise à l'arrière du support fixe 10, entre la cloison tournante 49 intégrale de la turbine axiale 40, et la cloison fixe 19, intégrale du support fixe 10; chambre dans laquelle pénétre son moyeu 59 prêt à transmettre son mouvement de rotation au récepteur d'énergie mécanique sélectionné, et supporté dans cette chambre des machines soit par l'arbre fixe 13, ou la cloison 19, ou tout autre moyen à prévoir dans la structure du support fixe 10;

Enfin la partie arrière du dit support 10, composée de la cloison 19 et du carénage concave 20, a une forme extérieure destinée à substituer à un fuselage encombrant, un dispositif capable non seulement d'éliminer la contre pression opposée par un courant beaucoup plus lent, à la masse active de direc -tion de vitesse $V_{50}$ éjectée par la turbine radiale composée 50, mais tout au contraire de tendre à l'accélérer en l'entrainant dans le laminoir formé par la masse active de courant de direction de vitesse $V_{40}$ ejectée par la turbine ex-

térieure axiale composée 40,et par un tourbillon permanent de section quasi-elliptique de centre $C_{20}$,dont le mouvement en direction de ses lignes de courant $V_{20}$ est amorcé et entretenu par l'énergie trés importante de la masse active $V_{40}$ et concentrée en cette direction par la forme inductrice des bords de fuite des aubes 40;

Revendications de brevet

1. Turbo Machine composée opérant suivant un nouveau principe catactéristique lui permettant de convertir sous rendement maximum possible, l'énergie des courants fluides en énergie mécanique, et dont le principe caractéristique consiste à diviser en deux parts, de rapport optimum, la Masse Active Totale du fluide intercepté par la machine et de transférrer sous forme d'accélération, l'énergie de l'une de ces masses actives secondaire à l'autre masse active, et par ce mécanisme la faire bénéficier de la propriété spécifique de l'Energie Dynamique des Fluides qui est "sa Proportionalité à la Puissance Cubique de la Vitesse du Courant", en concentrant ainsi dans cette masse secondaire, au rendement prés des composantes accélératrices, toute l'énergie du fluide intercepté, avant son éjection dans la composante finale réceptrice de cette énergie;

2. Ce convertisseur d'énergie est constitué par un support central fixe 10 de forme extérieure quasi cylindrique, comportant une ouverture frontale 11 de diamétre voisin du diamétre maximum, suivie d'un guide 12 à profile convergent, dans lequel s'engage la masse active centrale du fluide sélectionée pour être accélérée; un arbre central longitudinal 13 est connecté par des bras 14 inducteurs de mouvement, sur la periphérie de l'ouverture frontale 11, ces inducteurs 14 sont partiellement engagés dans le guide 12, constituant des sections de connection importantes; l'arbre 13 comporte à l'arrière une cloison constituée d'éléments en forme 19 et 20;

le profile du guide convergent 12 du support central 10 est dirigé sur l'orifice d'entrée d'un accélérateur 30;

3.L'accélérateur 30 est monté directement,et libre de tourner sur l'arbre central fixe 13;ses organes d'accélération comprennent dans leur ordre d'action: un hélicoïde composé 31 et 34,un spiraloïde composé 35,et un centrifugeur 36,ces organes d'accélération sont montés entre deux guides 30 et 32 dont les profiles sont convergents et incurvés pour changer la direction initiale axiale de la masse active centrale du courant,en direction finale radiale,avec leur section d'éjec -tion cylindrique terminale 37,adjacente à la section d'admission cylindrique correspondante de la Turbine Réceptrice Radiale Composée 50;

4.L'accélérateur 30 est entrainé en mouvement de rotation par la Turbine Axiale Composée 40 dont les aubes sont radialement disposées autour du support fixe 10 pour intercepter la masse active annulaire correspondante sélectionnée pour accélérer la masse active centrale;avec ses dispositifs d' appui reposants: à l'avant,sur et autour du guide 32 de l' accélérateur 30; et à l'arrière sur l'arbre fixe 13; avec connection par train épicycloidal entre le support fixe 10 portant la couronne dentée 70 donnant appui aux pignons sattellites 71 portés par la turbine axiale 40,pour entrainer dans le même sens positif la couronne dentée extérieure 73 portée par l'accélérateur 30

5.La Radiale Turbine Composée Réceptrice 50 est montée co-axia -lement avec l'accélérateur 30,pour convertir la masse active centrale accélérée que lui injecte ce dernier,en énergie mécanique qu'elle transmet par son arbre 59,dans la chambre des machines 60 située à l'arrière du support central fixe;

6.Les Turbines Composées Radiales et Axiales suivant l'invention,ont une structure nouvelle caractérisée par leur aubage qui est constitué d'aubes alternées de profile appartenant à deux séries de caractéristiques différentes,comprenant:

Une première série d'aubes principales 51 normalement espacées,dont la ligne médiane ABC du profile est aussi longue et incurvée que possible et que compatible,et telle que les tangentes menées à cette ligne médiane,du bord d'attaque A et du bord de fuite C du profile,forment un angle extérieur $\theta$ pouvant atteindre 325 degrés;avec la longueur AOC du profile convexe d'extrados la plus grande possible par rapport à la longueur AIC du profile concave d'intrados;avec une épaisseur conventionnelle relative pouvant atteindre 80 % ; avec une épaisseur absolue,définie par le rapport de l'épais -seur géométrique maximum prise le long de la ligne médiane ABC, à sa corde,pouvant atteindre 40 % ;avec un bord d'attaque très aigu A,positioné pour recevoir la masse active sous l'angle optimum; avec un bord de fuite C très aigu et si pos -sible constitué par la jonction tangentielle des contours extérieur et intérieur du profile et dirigé d'après la théorie,en fonction des données du problème à résoudre;

Une seconde série d'aubes complémentaires caracterisées par leur profile,de forme conçues pour constituer avec leur vis à vis un guide ou canal de forme spécifique; figure 8; Convergent 53 lorsque compris entre le profile d'intrados de contour A'I'C' de l'aube complémentaire 52 et le profile d' extra dos de contour AOC de l'aube principale adjacente 51 ; Paralléle 54 lorsque compris entre le profile d'extrados A'O'C' de l'aube complémentaire 52,et le profile d'intrados AIC de l'aube principale adjacente 51, comme en figure 8;

Avec,en fonction du type de turbine composée,radiale ou axiale ,de ses variables et paramétres,l'origine A' du bord d'attaque des aubes complémentaires 52, positionée:

Soit en retrait du lieu géométrique de l'origine A des aubes principales 51,figure 5;

Soit sur le même lieu géométrique que celles ci,figure 8;

7. Avec des Carénes Marginales 45,figure 3,montées à l'extrémité libre des aubes axiales ou radiales fixées en porte à faux dans leur support; carénes qui bien adaptées,diminuent la trainée de profile des ailes d'avions,donc des aubes,suivant la théorie de l'auteur,exposée dans ses brevets francais No.: 799 706 du 22 Mars 1935 et son addition No.: 47 125 , du 2 Mars 1936.

_Fig. 1_

RENDEMENT DU CONVERTISSEUR EN FONCTION DU RAPPORT DE SES PARAMETRES: $R_B/R_A$

1.3

1.2

1.3

1

.9

.8

.7

.6

.5

.4

.3

.2

.1

II

C

B

A

A'

I

RENDEMENT DES EOLIENNES

$(R_B/R_A)$

0    1    2    3    4    5

_Fig. 2_

_Fig. 3_

Fig. 4

Fig. 5

Fig.7

Fig.6

31

30

35

31

36

T

A

36

φ

31

35

30

4/5

0053972

Fig. 8

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| X | FR - A - 578 074 (INST. VOOR AERO- EN HYDRODYNAMIEK) <br><br> * page 1, ligne 47 à page 2, ligne 83; page 3, lignes 19 à 57 * <br><br> -- | 1 | F 03 B 3/00 <br> 17/06 |
| X | FR - A - 907 290 (COMP. ELECTRO-MECANIQUE) <br><br> * page 2, ligne 14 à page 5, ligne 27 * <br><br> -- | 1 | **DOMAINES TECHNIQUES RECHERCHES (Int. Cl. ³)** <br><br> F 03 B <br> F 03 D |
| A | FR - A - 2 360 768 (MOUTON-THOMPSON) <br><br> * page 11, lignes 5 à 30 * <br><br> ---------- | 2 | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-03-1982 | DE WINTER |

OEB Form 1503.1   06.78